Europäisches Patentamt

European Patent Office

Office européen des brevets

(19)

(11) Publication number: **0 194 005**

**A1**

# EUROPEAN PATENT APPLICATION

(21) Application number: **86300248.1**

(22) Date of filing: **15.01.86**

(51) Int. Cl.⁴: **G 02 B 21/00**

(30) Priority: **31.01.85 DE 3503163**

(43) Date of publication of application: **10.09.86**
Bulletin 86/37

(84) Designated Contracting States: **AT FR GB**

(71) Applicant: **C. Reichert Optische Werke AG, P.O. Box 95 Hernalser Hauptstrasse 219, A-1170 Vienna (AT)**

(72) Inventor: **Hartmann, Hans, Barawitzkagasse 10/2/7, Vienna (AT)**

(74) Representative: **Coxon, Philip et al, Eric Potter & Clarkson 14 Oxford Street, Nottingham NG1 5BP (GB)**

(54) **Photometer for use in microscope image scanning.**

(57) A photometer (11) for use in microscope image scanning comprises a photometer axis (13) having a detector (16) at one end thereof, a chopper (17) disposed on the photometer axis (13) for interrupting periodically the photometer axis (13), and arresting means (22) for arresting the chopper (17) in a position in which the photometer axis (13) is not interrupted. This enables microscope image scanning to be conducted at high scanner frequencies, because when such high frequencies are used the chopper (17) can be arrested in a position in which the photometer axis (13) is not interrupted.

FIG.1

ACTORUM AG

0194005

DESCRIPTION

This invention relates to a photometer for use in microscope image scanning.

In microscope image scanning it is known to provide a photometer having a beam path and a chopper disposed in the beam path for interrupting periodically a beam transmitted along the beam path. Typically the chopper comprises a drive motor and a rotary element. An example of an existing microscope having this type of system is the UnivaR research microscope from the company Reichert of Vienna.

The chopper serves to increase the accuracy and reproducibility of measurement. With this known arrangement a measurement in the bright phase (i.e. when the chopper does not interrupt the beam path) and a measurement in the dark phase (i.e. when the chopper does interrupt the beam path) are carried out alternately. The signals derived in these two phases are then transmitted separately as a measurement signal and as a dark current signal, and then, by formation of the difference between the measurement signal and the dark current signal, the dark current is compensated and the zero point can be permanently regulated.

The frequency of rotation of the chopper may be regulated in order to keep the electronic measurement frequently constant; in this arrangement, a photoelectric cell is employed in order to determine the actual frequency, which is then compared with the nominal frequency. The photoelectric cell also serves at the same time for switching over from the measurement signal to the dark current signal and visa versa.

The known photometer also permits image scanning of an object with the aid of a scanning system, for which purpose the object stage of the associated microscope can be moved with the aid of stepping motors in mutually perpendicular directions in accordance with a scanning frequency. In prior systems the scanning frequency is much less than the chopper frequency and as long as the chopper is retained the scanning frequency cannot increased. This is because synchronisation between the scanning system and the chopper would need to be effected when the chopper and scanning frequencies are approximately equal, and this is not possible because of the inertia associated with these systems. However, even when the chopper is not driven, the known photometer cannot be operated with a higher scanning frequency because the rest position of the chopper cannot be controlled and hence is not defined. Accordingly, in the prior art, the use of a chopper in a photometer inevitably leads to the result that the scanning frequency must remain relatively low.

An object of the invention is to provide a photometer for use in microscope image scanning which can be operated at relatively high scanning frequencies.

According to the present invention there is provided a photometer for use in microscope image scanning, comprising a photometer axis having a detector at one end thereof, a chopper disposed on the photometer axis for interrupting periodically the photometer axis, and arresting means for arresting the chopper in a position in which the photometer axis is not interrupted.

A pin hole occluder can be provided on the photometer axis for image scanning. An object viewed in a microscope can be imaged in the plane of the pin hole occluder, and part of the image field of the object can be transmitted as a light beam along the photometer axis to the detector. The light beam is interrupted when the chopper interrupts the photometer axis.

Advantageously, the arresting means is adapted to arrest the chopper at a predetermined frequency of the image scanning.

The chopper may comprise a drive motor and a rotary element, and the rotary element may interrupt the photometer axis and may be arrested by the arresting means.

In a preferred embodiment light sensing means is provided, and the light sensing means may have an optical axis which is disposed so that it is interrupted periodically by the chopper, for example, by the rotary element of the chopper. The light sensing means conveniently comprises a photoelectric cell.

The chopper is preferably provided with a rotating edge, and the light sensing means may be adapted to generate an output signal which increases with increasing penetration of the rotating edge into the optical axis of the light sensing means. Desirably the light sensing means is disposed in a position such that the rotating edge is situated in the optical axis of the light sensing means when the photometer axis is not interrupted.

The arresting means may include control means to control the drive motor in response to an output signal of the light sensing means.

Preferably the control means is adapted to control the chopper in such a manner that when the output of the light sensing means is above a limiting value the chopper receives an acceleration which is positive in its direction of rotation, and when the output of the light sensing means is less than or equal to the limiting value the chopper receives an acceleration which is negative in its direction of rotation, the maximum negative acceleration being greater than the maximum positive acceleration. To this end the control means may comprise a proportional amplifier having an output zero voltage line and an input zero voltage line, the output zero voltage line being displaced relative to the input zero

0194005

voltage line by an amount corresponding to the limiting value of the output signal of the light sensing means.

It is possible to operate the photometer with the aid of magnets, which become effective selectively in order to drive the rotary element of the chopper into a defined rest position in which the photometer axis is not interrupted, and to hold it there.

Reference is now made to the accompanying drawing in which:

Figure 1 is a schematic side elevation of a photometer according to the invention;

Figure 2 is a plan view of a rotary element of a chopper shown in Figure 1;

Figure 3 is the block circuit diagram of a control system for the photometer shown in Figure 1; and

Figure 4 illustrates signal progressions applicable to the control means of Figure 3.

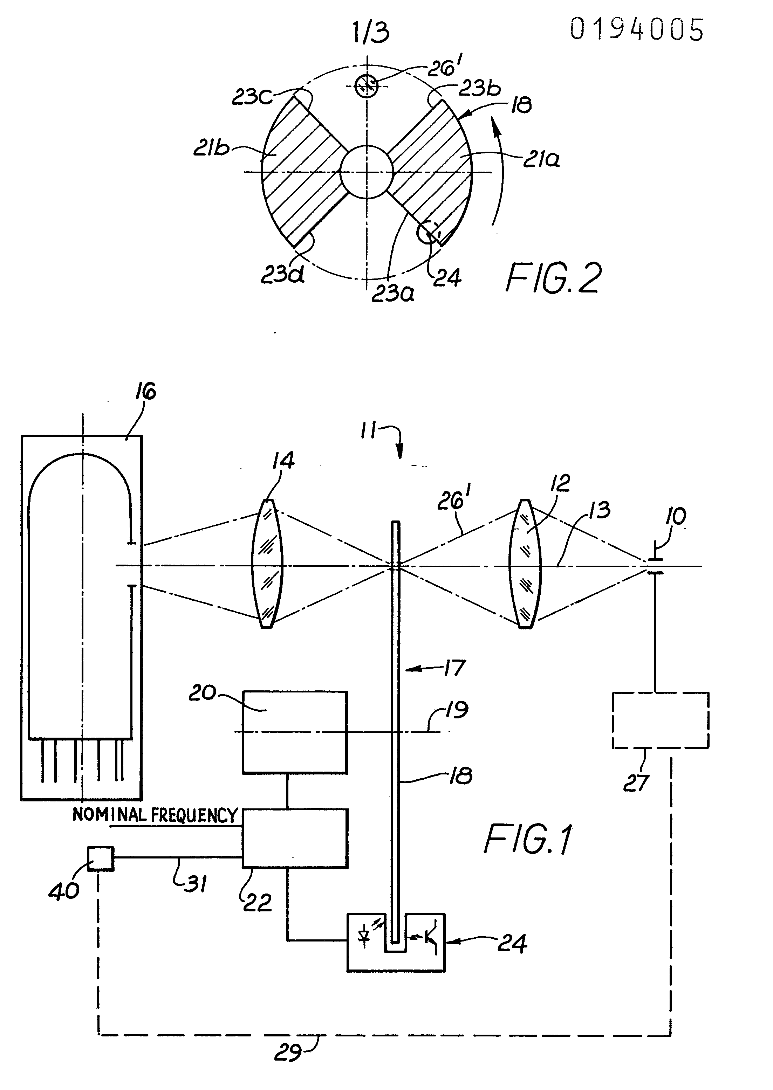

In Figure 1 a photometer generally designated 11 comprises a photometer axis 13 which extends between a microscope optical axis (not shown) disposed on the right of the drawing, and a detector 16 disposed on the left the drawing.

The optical system of the microscope forms an image of an observed object in a plane of the photometer 11 in which a pin hole occluder 10 is disposed; the pin hole occluder 10 is disposed on the photometer axis 13. Converging lenses 12 and 14 are also disposed on the photometer axis 13, and serve to image the object field of the pin hole occluder 10 near the entrance to the detector 16. The detector 16 may, for example, be a photomultiplier.

A chopper generally designated 17 is also provided; the chopper 17 comprises a rotary element 18 which is driven by a motor 20. The rotary element 18 (which is shown in plan view in Figure 2) interrupts the photometer axis 13 of the photometer 11 in a known manner near the focal point of the converging lenses 12 and 14, as is shown in Figure 1. The rotary element 18 is disposed between the lenses 12 and 14 and is rotatable about a chopper axis 19 which is spaced from and parallel to the photometer axis 13.

Figure 1 also shows a scanning arrangement 27, with which the pin hole occluder 10 can be displaced in the object field in order to perform image scanning; this enables the object to be scanned point by point using optical means. The image scanning could however also be carried out at any time in a different manner; for example an object stage of the microscope could be driven in a selected direction with the aid of stepping motors, thus enabling the pin hole occluder 12 to remain stationary. In either system the stepping drive of the object stage or of the pin hole occluder 12 is effected with a specific scanner frequency which is adjustable.

The chopper 18 comprises two lobes 21a and 21b each of which forms a sector of a circle. The lobe 21a has rotating edges 23a and 23b, and the lobe 21b has rotating edges 23c and 23d. In the direction of rotation of the rotary element 18 (i.e. anticlockwise in Figure 2), the rotating edges 23a and 23c constitute trailing edges and the rotating edges 23b and 23d constitute leading edges.

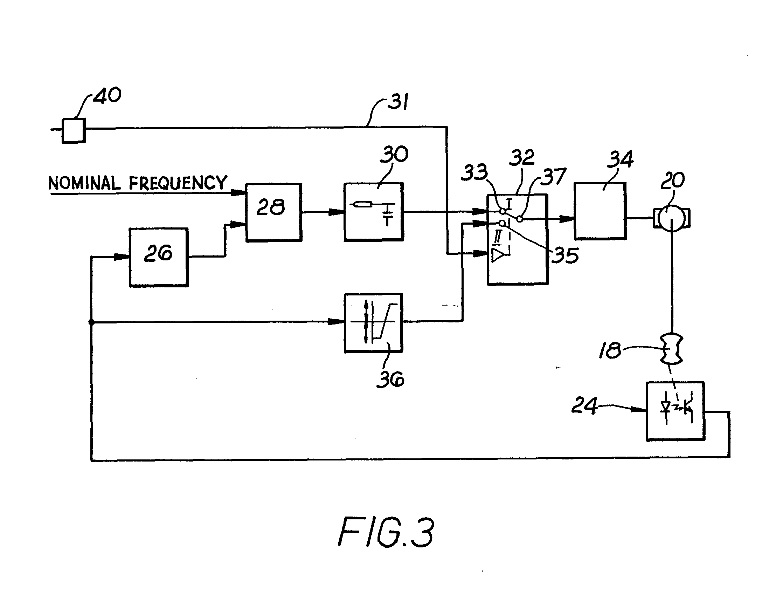

In prior art photometers, the frequency of the chopper is substantially greater than the scanner frequency, so during the pauses between the steps of the scanner the beam to be measured with the detector 16 is interrupted on a plurality of occasions by the rotary element 18, in order alternately to obtain measurements in the bright and in the dark phase. The constancy of the chopper frequency is of great importance in the measurement technique, and is regulated with the aid of control system 22, which is shown in detail in Figure 3.

The control system shown in Figure 3 is adapted to arrest the rotary element 18 of the chopper 17 in a position in which a beam 26' passing to the detector 16 along the photometer axis 13 is not interrupted; the control system 22 includes arresting means for arresting the rotary element. Thus, when the arresting means arrests the chopper 17, the beam 26' can pass unimpeded along the optical axis 13 from the microscope optical axis to the detector 16.

This defined arrest of the chopper 17 permits the photometer 11, even when equipped with the chopper 17, to be used at the high scanning frequencies at which it is necessary to cease using the chopper because of the difficulty of synchronisation between the chopper and the scanner system.

The photometer 11 also includes light sensing means in the form of a so-called fork photoelectric cell 24 (which is known per se). The photoelectric cell 24 consists of a light-emitting diode and a photo-diode. The photoelectric cell 24 has an optical axis 25 which is arranged so that it is interrupted periodically by the rotary element 18. The location of the cell 24 is selected so that the photometer axis 13 is not interrupted by the chopper when the trailing edge 23a or 23c of the rotary element 18 is situated in the optical axis 25 of the photoelectric cell 24.

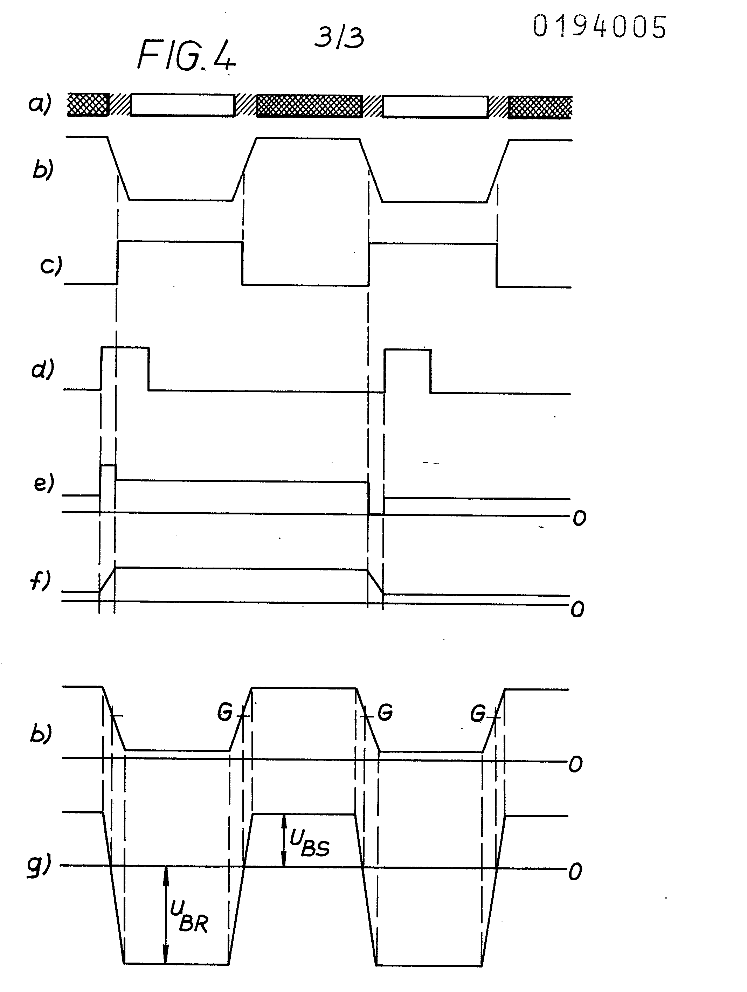

The signal progression at the output of the photoelectric cell 24 is shown in Figure 4b, the periodic interruption of the optical axis 25 of the photoelectric cell 24 being shown in Figure 4a, which is associated with Figure 4b. In Figure 4a the cross-hatched fields signify complete interruption of the optical axis 25 by the chopper 17, whilst the single-hatched fields indicate the penetration of the trailing edge 23a or 23c into the optical axis 25 of the photoelectric cell 24.

As shown in Figure 3, an inverting Schmitt trigger 26 is connected to the photoelectric cell 24. The Schmitt trigger 26 converts the trapezoidal signal shown in Figure 4b into a rectangular signal as shown in Figure 4c. The component 74 C 14 can be used as the Schmitt trigger 26.

The output of the Schmitt trigger 26 is connected to the input of a digital phase detector 28, which is side-triggered and is provided with a sign memory; the digital phase detector 28 receives the nominal frequency shown in Figure 4d at its other input. The component MC1 4046 B can be employed as the digital phase detector 28, the input connections $PCA_{in}$ and $PCB_{in}$ being used; the signal represented in Figure 4e then appears at the output $PC2_{out}$.

A low-pass filter 30 is connected to the output of the phase detector 28. The low-pass filter 30 filters the pulses emitted by the phase detector 28 and produces a control signal which is illustrated in Figure 4f. The control signal is transmitted to a multiplexer 32 (for example, component MC1 4066 B). The multiplexer 32 has two inputs 33 and 35 and an output 37, and the control signal is transmitted to the input 33. The multiplexer 32 has two switch positions I and II. In switch position I the input 33 is connected with the output 37, and in switch position II the input 35 is connected with the output 37. The switching between position I and II is controlled by a PASS/ARREST signal transmitted to the multiplexer 32 via a line 31. A switch 40 is provided for switching between the PASS and ARREST signal.

As shown in Figure 1 the switch 40 may be connected to the scanning arrangement 27 via a line 29. When the frequency of the scanning arrangement reaches a predetermined value the scanning arrangement generates a signal which is transmitted via line 29 to actuate the switch 40 which causes the ARREST signal to be generated.

This enables the chopper to be arrested automatically when the scanner frequency nears the chopper frequency.

When the multiplexer 32 receives the PASS signal, the control signal shown in Figure 4f from the low pass filter 30 is transmitted through the multiplexer to a proportional amplifier 34 (for example component 741), which amplifies the control signal, which is then fed to the low inertia DC motor 20 in order to drive the rotary element 18. In this manner, the chopper frequency may be predetermined and regulated by means of the nominal frequency, so that the chopper frequency remains constant to the greatest possible extent and in the same phase relationship.

When the multiplexer 32 receives the ARREST signal it switches over to position II, in which position the signal route from the photoelectric cell 24 to the trigger 26, the detector 28 and the filter 30 is replaced with a route via control means in the form of proportional amplifier 36; the amplifier 36 may comprise the conponent 741. The amplifier 36 executes a level displacement: the zero line of the output signal of the amplifier 36 is displaced relative to the zero line of the input signal with simultaneous amplification of the input signal; the output signal of the amplifier 36 is shown in Figure 4g; the input signal of the amplifier 36 is shown in Figure 4b. The output signal of the amplifier 36 is transmitted to the DC motor 20 via the multiplexer 32 and the proportional amplifier 34.

In the output illustrated in Figure 4g, the zero line passes through points which correspond to the limiting values G in the input signal of the amplifier 36 shown in Figure 4b. These limited values G are selected in such a manner that the zero line in Figure 4g is situated asymmetrically in relation to the signal progression, so that the maximum acceleration voltage $U_{BS}$ occurring when

0194005

the optical axis 25 of the photoelectric cell 24 is interrupted by the chopper 17 is smaller than the maximum braking voltage $U_{BR}$ occurring with opposite polarity when the optical axis 25 of the photoelectric cell 24 is not interrupted by the chopper. Thus, when the chopper 17 with the symmetrical two-lobe element 18 is arrested, the braking retardation when the optical axis 25 of the photoelectric cell 24 is uninterrupted is greater than the acceleration which occurs during the time in which the optical axis 25 of the photoelectric cell 24 is interrupted by the chopper 17. Accordingly, the rotary element 18 is braked until it comes to rest.

If the optical axis 25 of the photoelectric cell 24 is uninterrupted when the rotary element 18 comes to rest, the rotary element 18 will then be rotated in the opposite direction because of the reversed polarity of the braking voltage, until the trailing edge 23a or 23c interrupts the optical axis 25 of the photoelectric cell 24 and is accelerated again in the original direction of rotation. The process is repeated, and finally the rotary element 18 occupies a stable position, in which the trailing edge 23a or 23c is situated in the optical axis 25 of the photoelectric cell 24, as is shown in Figure 2.

The leading edges 23b or 23d of the rotary element 18 cannot remain permanently in the optical axis 25 of the photoelectric cell 24 because this is an unstable condition.

In summary, the components 18, 20, 24, 26, 28, 30, 32 and 34 comprise an alignment synchronisation system (phase-locked loop) and is employed for speed regulation, the circuit being designed to achieve the lowest possible degree of phase noise. Accordingly, both the signal from the fork photoelectric cell 24 and the nominal frequency can be used for synchronisation with the photometric measurement.

0194005

The components 32, 34, 36, and 40 comprise the arresting means for the chopper. These components act as a proportional regulator, a deviation being obtained if the optical axis 25 of the fork photoelectric cell 24 does not coincide with a trailing edge 23a or 23c of the chopper 17. Before the system can adopt its stationary state, it must first effect braking of the chopper 17. This is achieved by the level displacement, whereby the deviation, which gives rise to drive in the opposite direction, brakes the motor 20 to a greater extent than that to which it can be accelerated again in the phases in which the deviation gives rise to acceleration again. The chopper will not be arrested until the motor 20 has been braked sufficiently to cause the chopper 17 to rotate in the opposite direction for a brief period of time (i.e. clockwise in the embodiment shown).

0194005

CLAIMS

1. A photometer for use in microscope image scanning, characterised by a photometer axis having a detector at one end thereof, a chopper disposed on the photometer axis for interrupting periodically the photometer axis, and arresting means for arresting the chopper in a position in which the photometer axis is not interrupted.

2. A photometer according to Claim 1 characterised in that the arresting means is adapted to arrest the chopper at a predetermined frequency of the image scanning.

3. A photometer according to Claim 1 or 2 characterised in that the chopper comprises a drive motor and a rotary element.

4. A photometer according to Claim 3 characterised in that the rotary element interrupts periodically the photometer axis, and is arrested by the arresting means.

5. A photometer according to any preceding claim further characterised by light sensing means having an optical axis which is disposed so that it is interrupted periodically by the chopper.

6. A photometer according to Claim 5 characterised in that the chopper is provided with a rotating edge, and the light sensing means is adapted to generate an output signal which increases with increasing penetration of the rotating edge into the optical axis of the light sensing means.

7. A photometer according to Claim 6 characterised in that the light sensing means is disposed in a position such that the rotating edge is situated in the optical axis of the light sensing means when the photometer axis is not interrupted.

8. A photometer according to Claim 5, 6 or 7 characterised in that the arresting means includes control means to control the drive motor in response to an output signal of the light sensing means.

9.   A photometer according to Claim 8 characterised in that the control means is adapted to control the chopper in such a manner that when the output of the light sensing means is above a limiting value the chopper receives an acceleration which is positive in its direction of rotation, and when the output of the light sensing means is less than or equal to the limiting value the chopper receives an acceleration which is negative in its direction of rotation, the maximum negative acceleration being greater than the maximum positive acceleration.

10.  A photometer according to Claim 8 or 9 characterised in that the control means comprises a proportional amplifier having an output zero voltage line and an input zero voltage line, the output zero voltage line being displaced relative to the input zero voltage line by an amount corresponding to the limiting value of the output signal of the light sensing means.

0194005

FIG.2

NOMINAL FREQUENCY

FIG.1

FIG.3

FIG.4    3/3    0194005

a)
b)
c)
d)
e)  0
f)  0
b)  $G$  $G$  $G$  0
g)  $U_{BS}$  $U_{BR}$  0

0194005
Application number

EP 86 30 0248

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 809 482 (N.R.D. ASLUND et al.) <br> * column 4, line 67 - column 5, line 26 * | 1 | G 02 B 21/00 |
| A | DE-B-2 540 511 (C. REICHERT) <br> * claim 1 * | 1 | |
| A | US-A-4 013 364 (K. NAKANO et al.) <br> * column 6, line 66 - column 7, line 19 * | 1 | |

---

|  | TECHNICAL FIELDS SEARCHED (Int. Cl.4) |
|---|---|
| | G 01 J 1/16 <br> G 01 N 21/59 <br> G 02 B 21/00 |

The present search report has been drawn up for all claims

| Place of search | Date of completion of the search | Examiner |
|---|---|---|
| BERLIN | 04-05-1986 | FUCHS R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82